# EUROPEAN PATENT SPECIFICATION

(11) **EP 1 507 804 B1**
(45) Date of publication and mention of the grant of the patent: **30.01.2008**
(21) Application number: 03725168.3
(22) Date of filing: 07.05.2003
(51) Int. Cl.: C08B 37/00, C08G 83/00, C08G 65/331, C07K 2/00

(54) **ACTIVE CARBOHYDRATE CONTAINING PROTECTING REAGENTS FOR CHEMICAL MODIFICATIONS, THEIR PRODUCTION AND USE**
SCHUTZREAGENZIEN ENTHALTEND AKTIVE KOHLENHYDRATE FÜR CHEMISCHE MODIFIZIERUNGEN, DESSEN HERSTELLUNG UND VERWENDUNG
REACTIFS PROTECTEURS CONTENANT DES CARBOHYDRATES ACTIFS DESTINES A DES MODIFICATIONS CHIMIQUES, ET PRODUCTION ET UTILISATION DE CES REACTIFS

(30) Priority: 08.05.2002 EP 02090169
(43) Date of publication of application: 23.02.2005
(73) Proprietor: Medical Enzymes AG, 10178 Berlin (DE)
(72) Inventor: KRÄHMER, Ralf, 13189 Berlin (DE); FERSE, Angela, D - 10709 Berlin (DE); LEENDERS, Frank, D - 13187 Berlin (DE)
(74) Representative: Dey, Michael
(86) International application number: PCT/EP2003/004790
(87) International publication number: WO 2003/095496

(56) References cited:
- EP-A- 0 852 243
- WO-A-02/09766
- WO-A-97/48711
- WO-A-99/01479
- WO-A-99/32154
- LI MINGIN ET AL.: "The chemical modification of E. coli L-asparaginase with O-carboxymethylated chitosan" CHINESE JOURNAL OF REACTIVE POLYMERS, vol. 7, no. 1, 1998, pages 49-53, XP008021765 China
- WILEMAN THOMAS E. ET AL.: "Soluble asparaginase-dextran conjugates show increasede circulatory persistence and lowered antigen reactivity" JOURNAL OF PHARMACY AND PHARMACOLOGY, vol. 38, no. 4, 1986, pages 264-271, XP008021760 UK
- ZALIPSKY S: "CHEMISTRY OF POLYETHYLENE GLYCOL CONJUGATES WITH BIOLOGICALLY ACTIVE MOLECULES" ADVANCED DRUG DELIVERY REVIEWS, AMSTERDAM, NL, vol. 16, no. 2/3, 1995, pages 157-182, XP002037428 ISSN: 0169-409X
- ROY R: "GLYCODENDRIMERS: A NEW CLASS OF BIOPOLYMERS" POLYMER NEWS, GORDON AND BREACH, NEW YORK, NY, US, vol. 21, no. 7, 1996, pages 226-232, XP002042908 ISSN: 0032-3918

## Description

The present invention relates to active carbohydrate containing protecting reagents represented by a carbohydrate central unit, which is attached to a polymer chain at least at one of the hydroxyl groups and to an active linkage group at the anomeric position of the carbohydrate central unit. These new compounds are active carbohydrate containing protecting reagents, glycodendrimers and related hydrophilic oligomers. Further the invention relates to a method for their preparation and their use for production of biologically active molecules, which are modified by these reagents preferred for biotechnological use.

The new age of biotechnology is coming up with more and more biological active macromolecules isolated and produced from different organisms, respectively. Furthermore, the protein-based pharmaceuticals urge increasingly into the drug market. Many biotechnologically produced pharmaceuticals suffer from the problems of relatively short half life *in vivo* (clearance and immune-mediated inactivation) and strong immunogenicity.

One possibility to get around the above described disadvantages is the chemical modification via the covalent attachment of hydrophilic polymers to bio-active molecules or drug carriers. It is also observed that the modification of small molecule drugs with such polymers leads to a lower toxicity and shows other beneficial effects on pharmaceutical properties of the small molecule drug.

The most common hydrophilic polymer is polyethylene glycol, which is simply called "PEG". A reason for its common use is the low toxicity of the polymer PEG, which means it is bio-compatible. As an example for biotechnological application the commercial available, activated polymer PEG is attached to proteins and enzymes. Such conjugates have shown *in vivo* a dramatically increased half life, reduced toxicity and a decreased rate of kidney clearance. Furthermore, the conjugates have shown an enhanced solubility in aqueous systems. A good overview about such applications is given by N. K. Jain et al., Pharmazie 2002, 57, 5-29 "Pegnology: a review of PEG-ylated systems".

In the case of small molecule drugs it has been shown, that conjugates containing the chemotherapeutic Doxorubicin show a significantly decreased toxicity in comparison with the unmodified Doxorubicin (F. Kratz et al., Bioorganic & Medicinal Chemistry 1999, 7, 251.7-2524).

These days a lot of procedures exist to covalently modify proteins with bio-compatible polymers like PEG or other hydrophilic polymers. The modification of proteins aims the extension of circulation time and the avoidance of immunogenicity or toxicity, respectively (Zalipsky, S. Advanced Drug Delivery Reviews, 1995, 16, 157-182).

Even though, this technology is far developed there remain some significant disadvantages: The modification of biopharmaceuticals with PEG in many cases leads to a dramatic decrease of their biological activity. Furthermore, polymers like PEG are characterized by a broad range of different molecular weights (polydisperse), which causes problems with the reproducibility of production and/or modification, respectively. Depending on the quality of the mPEG (monomethoxyPEG) and the type of activation in some cases unwanted cross-linking reactions occur.

Summarizing, there is a great need for new hydrophilic oligomers or polymers, which can be used for the modification of biotechnological products (e.g. proteins, surfaces) or small drugs.
The present invention is directed to overcome these deficiencies. The object on which the invention is based on is to generate such hydrophilic substances, which can be used for the modification of biotechnological products and small molecule drugs. In view of the above described state of the art, the present invention has for its object to provide polymers having activated linker groups which react with amino functional groups of proteins or peptides and other functional groups of biotechnological products in aqueous solution and under mild conditions.

The present invention provides active carbohydrate containing protecting reagents represented by a carbohydrate central unit, which is attached to a polymer chain at least at one of its hydroxyl group and to an activated linkage group at the anomeric position *(position 1)* of the carbohydrate central unit, a *process* (method) for the synthesis of this class of compounds and their use for the covalent coupling to functional groups of biotechnological products and small molecule drugs as described below. The active carbohydrate containing protecting reagents according to the current invention has a single activated functional group (e.g. active ester), which will not support any cross linking reactions.

These new active carbohydrate containing compounds are hydrophilic, bio-compatible compounds. They are easy to prepare and the properties enable a broad field of application. Conjugates of these active carbohydrate containing compounds with biological active substances are suitable for prolonged therapies. Furthermore, the new carbohydrate containing compounds are also suitable for using them as medical material, namely for administering therapeutic amounts of conjugates of biological active compounds, which are containing the new masking reagent, for example for treatment of viral or bacterial infections or for cancer treatment.

In accordance with the invention conjugates of the active carbohydrate containing protecting reagents with biological active compounds such as proteins (e.g. human growth factors), enzymes, liposomes, antibodies, drugs, phospholipids, lipids, nucleosides, oligonucleotides, microorganisms, human cells and surfaces are also provided.

The active carbohydrate containing protecting reagents are represented by the general formula I 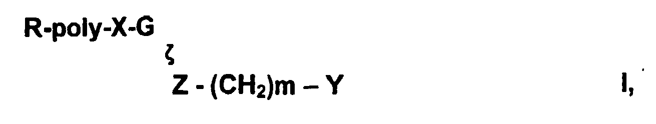 wherein a glycoside central unit G is attached to a polymer chain at least at one of the hydroxyl groups and to an activated linkage group at the anomeric position (1-position), which is able to react readily with other functional groups
and wherein
G is a glycoside central unit, which is a monosaccharide, an oligo-and polysaccharide consisting of monosaccharide units, an amino sugar or a polyol,
R-poly- is
   a polymer chain with one or more recurring monomer units or
   a repeating building block II which is attached via the linkage group
   to a further glycoside unit G 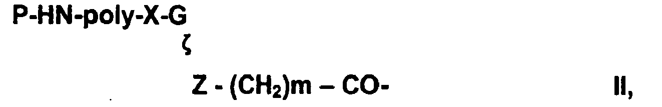 wherein P is an amino protecting group or the next repeating building block or a terminal unit **I**,
   whereas
   **R** is H, OH or selected from the group consisting of alkyl, O-alkyl (1 to 20 C atoms), benzyl, aryl, acetal, aldehyde, alkenyl, acrylate, acrylamide, active sulfone, alkyl amine, protected alkyl amine or amine, thiol and protected thiol, or also selected from the group consisting of a monosaccharide, an oligo- and polysaccharide consisting of monosaccharide units, an amino carbohydrate or a polyol, and
   **poly** is selected from a poly alkylene oxide, a poly oxyethylated polyol, a poly olefinic alcohol and a poly acrylomorpholine,
**X** is selected from --O--, -S-, -NH-, -NHCO-, -CONH-, -NHCO₂--, O₂CNH-, -CSNH- and -NHCS-,
**m** is 1 to 10, preferred 1 to 6
**Y is selected** from a group of (O-alkyl)₂, -OSO₂CH₂CF₃ (Tresyl),
   - CO - Q, maleimide, -O-CO-nitrophenyl or - trichlorophenyl,
   -S-alkyl (C₁ to C₆), -S-S-alkyl, -S-aryl, -S-S-aryl, -S-benzyl,
   -S-alkyl (C₁ to C₆)-OH, -S-alkyl(C₁ to C₆)-NH₂,
   -S-alkyl (C₁ to C₆)-OSO₂CH₂CF₃ and
   -S-alkyl (C₁ to C₆)-CO₂-Q-,
   -SO-alkenyl, -Halogen (Cl, Br, I),
   wherein
   **Q is** H or OH or is selected from a group of O-aryl, O-benzyl,
   O-N-succinimide, O-N-sulfosuccinimide, O-N-phthalimide,
   O-N-glutarimide, O-N-tetrahydrophtalimide,
   -N-norbomene-2,3-dicarboximide, hydroxybenzotriazole
   and hydroxy-7-azabenzotriazole
   and
**Z** is selected from -O-, -S- or -NH-, -N(alkyl C₁ to C₂₀)-, -N(aryl)-, -N(benzyl)-, -N(alkyl C₁ to C₂₀-OH)-, -N(alkyl C₁ to C₂₀-NH₂)- and -N(alkenyl)-

The glycoside central unit is represented in the L- or D-configuration and the configuration at the anomeric position (1-position) of the glycoside central unit is alpha, beta or a mixture of both.

According to the invention the preferred glycoside units are monosaccharides like aldoses, preferred glucose; ketoses, preferred fructose; pyranoses, preferred mannose, glucose; furanoses, preferred ribose and arabinose. Examples of specific oligo- and polysaccharides consisting of monosaccharide units, are lactose and melibiose. Typical monosaccharides are also amino sugars, preferred mannose amine, glucose amine and lactose amine.

Preferred acetal groups for **R** include (CH₃O)₂- and (CH₃-CH₂O)₂-, an aldehyde group is OHC-CH₂-O-, an alkenyl group is CH₂=CH-CH₂-O-, an acrylate group is CH₂=CH-CO₂-, a methacrylate group is CH₂=C(CH₃)-CO₂-, an acrylamide group include CH₂=CH-CONH-, an amino alkyl group is H₂N-CH₂-CH₂-, a protected amino alkyl group include W--NH-CH₂-CH₂--, wherein W is an amino protecting group, like Boc, Fmoc and Cbz, a thio alkyl group is HS-CH₂-CH₂--, and a protected thio alkyl group include V--S-CH₂-CH₂-, wherein V is a thiol protecting group.

The term "poly" used herein refers to a poly alkylene oxide like polyethylene glycols or polypropylene glycols, to a polyoxyalkylated polyol, like monomethoxy polyethylene glycols (mPEG) or oxyethylated triethanolamine, TEA(OE), to a poly olefinic alcohol, like polyvinyl alcohol.

Polymers are preferred in which the polymer chain is terminated on one side by a methoxy group.

Furthermore, polymers are preferred in which the polymer chain is a polyethylene glycol, which is represented by the general structure:

R-(CH₂-CH₂-O)n-CH₂-CH₂--X-

wherein
R and X are as defined above and n is 0 to 2000 or
wherein R is also a repeating building block, which has one of the following structures III or IV: 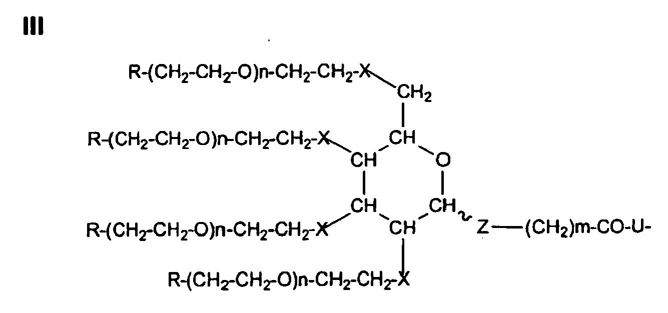 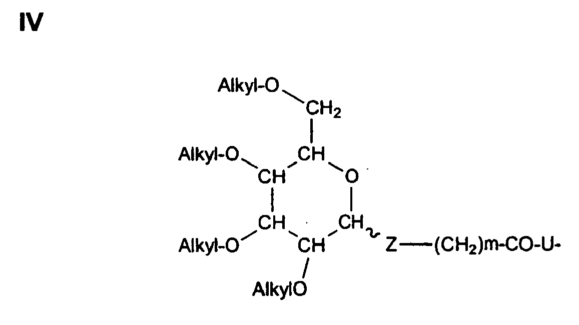 wherein n, m, R, X and Z are as defined above,
alkyl means 1 to 20 C atoms and U is selected of -O-, -S- and -NH-, whereas in the inventive protecting reagent the glycodendrimer repeating building block is commonly contained 4 to 1000 times.

Furthermore, the polymer chain can be an unsubsituted chain except for the terminus or can be also a random or block copolymer or a terpolymer.
Especially preferred are active protecting reagents with glucose as the glycoside central unit, which have the following structure V: 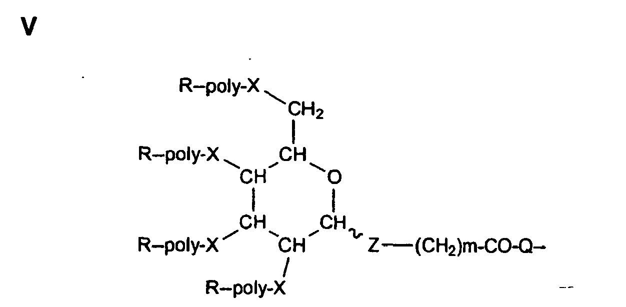 wherein m, poly, Q, R, X and Z are as defined above.

The active carbohydrate containing protecting reagents (I) of the present invention can be preferably prepared by an alkylation (Williamson Ethersynthesis) or other nucleophilic substitution reactions (e.g. urethane formation) between a glycoside, which contains a pentenyl group at the anomeric position, and a polymer. The reaction is carried out in solution. The pentenyl group of the resulting synthesis intermediate is converted to the active carbohydrate containing protecting reagent as shown in synthesis scheme 1 (Fraser-Reid, B.; Journal of the Organic Chemistry 2000, vol. 65, pp. 958-963).

The preferred polymers used for the preparation of the active protecting reagents are polyethylene glycols, which are covalently attached to 4-penten-1-yl glycosides.
The pentenyl group is a multifunctional group, which can be converted to many different activated linkers. These polymer containing pentenyl glycosides are also used as building blocks in order to form larger, branched aggregates (glycodendrimers or parts of them). The branched, active carbohydrate containing protecting reagents react readily with amino functional groups of proteins and peptides in aqueous solution under mild reaction conditions. The dendritic compound is coupled to the polypeptide backbone by forming an amid, urethane, thiourethane, carbamates, ether, thioether, a secondary amine (reductive amination, reaction with a tresylated or halogenated linkage unit).

The active carbohydrate containing protecting reagents according to this invention does not have to be of a particular molecular weight. A preferred preparation of the active carbohydrate containing protecting reagent has a molecular weight between 500 and 60000, more preferably between 800 and 20000.

The preference of the active carbohydrate containing protecting reagents according to the present invention is first the fact that the small-sized reagents are mono-disperse compounds, which is an advantage in production of homogenous protecting reagents, analysis of conjugates with these reagents, in purification of these conjugates and in the definition of a specification in terms of regulatory issues.
The "umbrella-like" structured active carbohydrate containing reagents provided in this invention have proven protecting properties by the means of increased stability against proteolysis of the conjugated biologically active compound. The biological activity of such conjugates is maintained and during the modification reaction no cross-linking occurs. In contrast, unwanted cross linking reactions are major problems when common activated mPEG's are used for modification, because commercial available mPEG's contain relevant amounts of dihydroxy polyethylene glycol, which gets activated during the production process for mPEG's and then functions as cross linker.
In terms of the invention such branched reagents are more effective in protecting proteins from proteolysis and in reducing the immunogenicity.

The active carbohydrate containing protecting reagents are used in the production of water soluble and isolatable conjugates with at least one biologically active molecule, a surface or a whole cell. The biologically active molecule is preferably selected from the groups of proteins, glycoproteins, peptides (e.g. human growth factors), enzymes, liposomes, antibodies, drugs, phospholipids, lipids, nucleosides, oligonucleotides, microorganisms, human cells, dyes and surfaces.

In a preferred manner the water soluble and isolatable conjugates have the structures VI or VII: 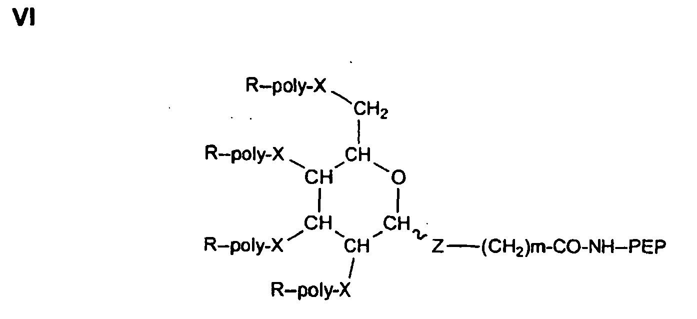 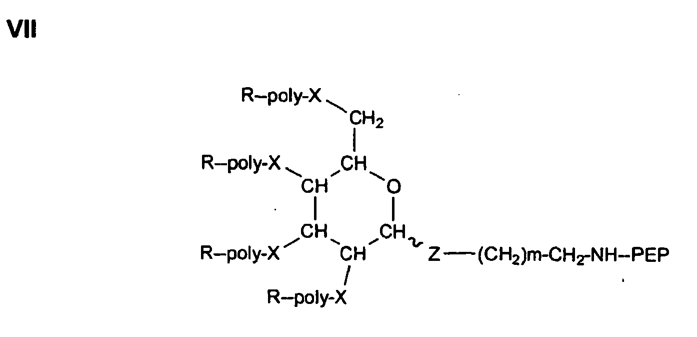 wherein m, poly, R, X and Z are as defined above and the unit NH-PEP represents an modified amino function (e.g. lysine group) of a biologically active molecule.

In terms of the present invention conjugates with the active carbohydrate containing protecting reagents are used to protect biologically active compounds, to increase the molecular weight of these biologically active compounds, thus reducing renal clearance, to prevent the formation of antibodies and antigen processing cells, respectively, and to minimize the proteolytic degradation. Furthermore, such a chemical modification is used to improve the bio-physical properties in terms of the solubility of drugs. The active carbohydrate containing protecting reagents are used to increase the solubility of hydrophobic active pharmaceutical ingredients (API's). These special kinds of pharmaceutical formulation facilitate the administration of hydrophobic drugs.

Furthermore, the active carbohydrate containing protecting reagents are also characterised by a good solubility in organic solvents, thus the modification of bio-catalysts (e.g. enzymes) with the new protecting reagents increase the solubility of the modified bio-catalysts in organic solvents, which is an interesting application for technical use.

Furthermore, the active carbohydrate containing protecting reagents according to the present invention are used to modify drug delivery and targeting systems (e.g. liposomes and antibodies), which opens new fields of application for these technologies.

Furthermore, the active carbohydrate containing protecting reagents are able to bind a biologically active molecule to other biologically active molecules, which may be the same or different, or to bind a biologically active molecule to a surface.

In a preferred manner the inventive reagents are suitable for the chemical modification of enzymes like asparaginase, glutaminase-asparaginase (PGA), glucocerebrosidase, of cytokines like alpha-Interferon, Interferon beta 1-b, G-CSF or of other therapeutically suitable proteins like TNF, human Insulin, antibodies or antibody fragments and small molecule drugs like doxorubicin and paclitaxel.

The new carbohydrate containing protecting reagents are particularly suitable for the chemical modification of pharmaceutical active ingredients. The pharmaceutical usefulness is characterized by a significantly increased protease stability (for example) of conjugates. Thus, the modification with the new carbohydrate containing protecting reagents will expand the circulation time *in-vivo,* which is required for pharmaceutical use of many biotechnological products.

The following examples are given to describe the invention, but should not limit the invention:

### Example 1

### Syntheses

### Example structures

In the schemes VIII and IX shown below the polyethylene glycol chains are covalently attached via an ether bond to the carbohydrate central unit. 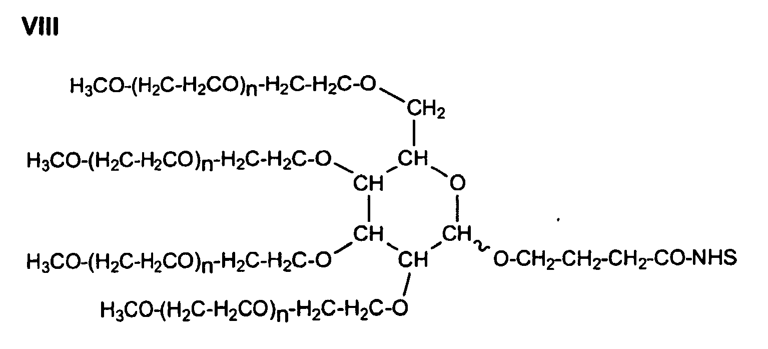 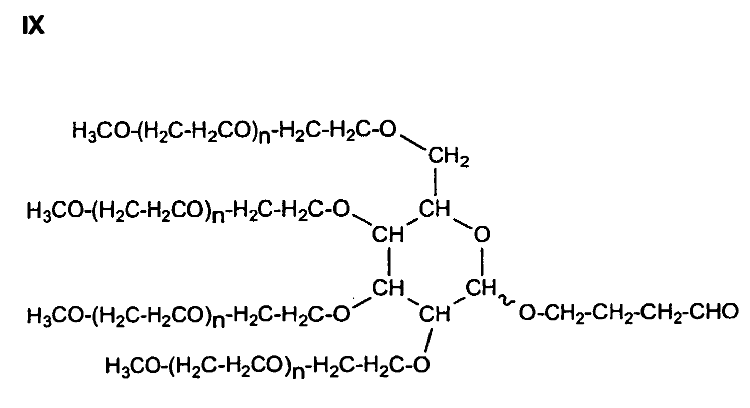 n is defined from 0 to 1000.

In the schemes X and XI shown below the polyethylene glycol chains are covalently attached via an carbamate bond to the carbohydrate central unit.

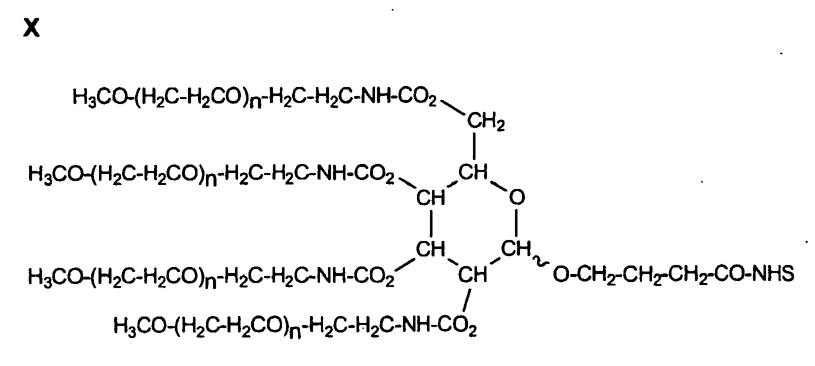

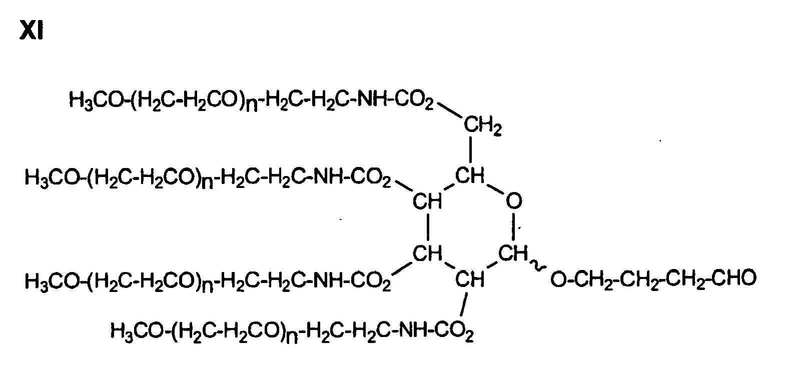

n is defined from 0 to 1000.

The following scheme XII shows branched, large sized structures connecting the two linkage strategies.

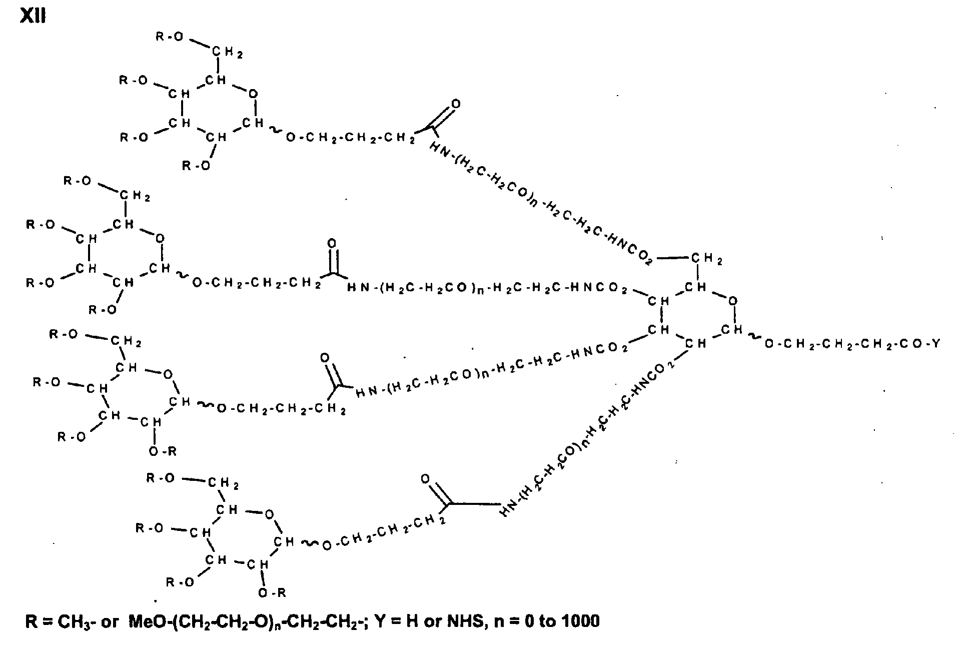

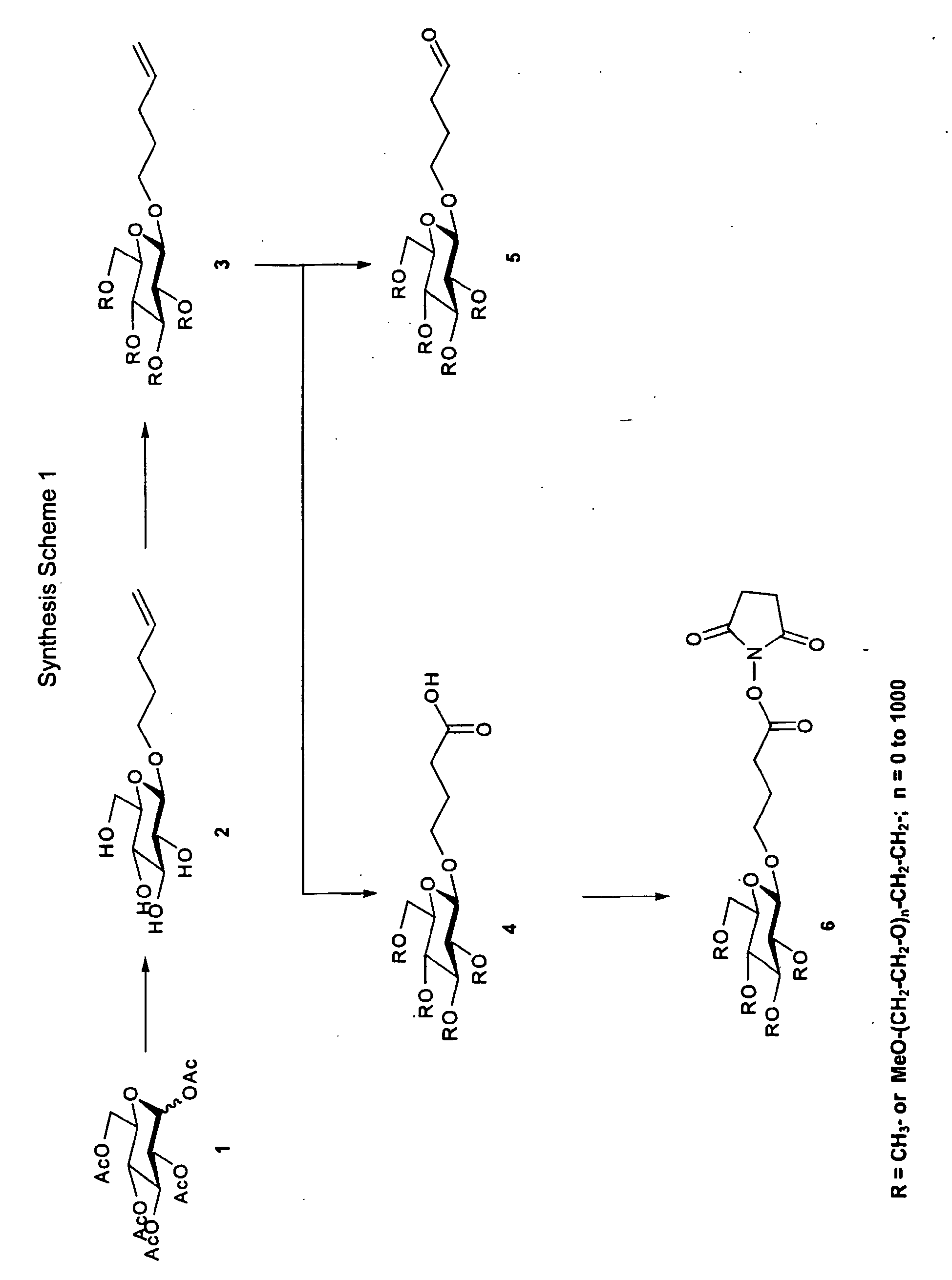

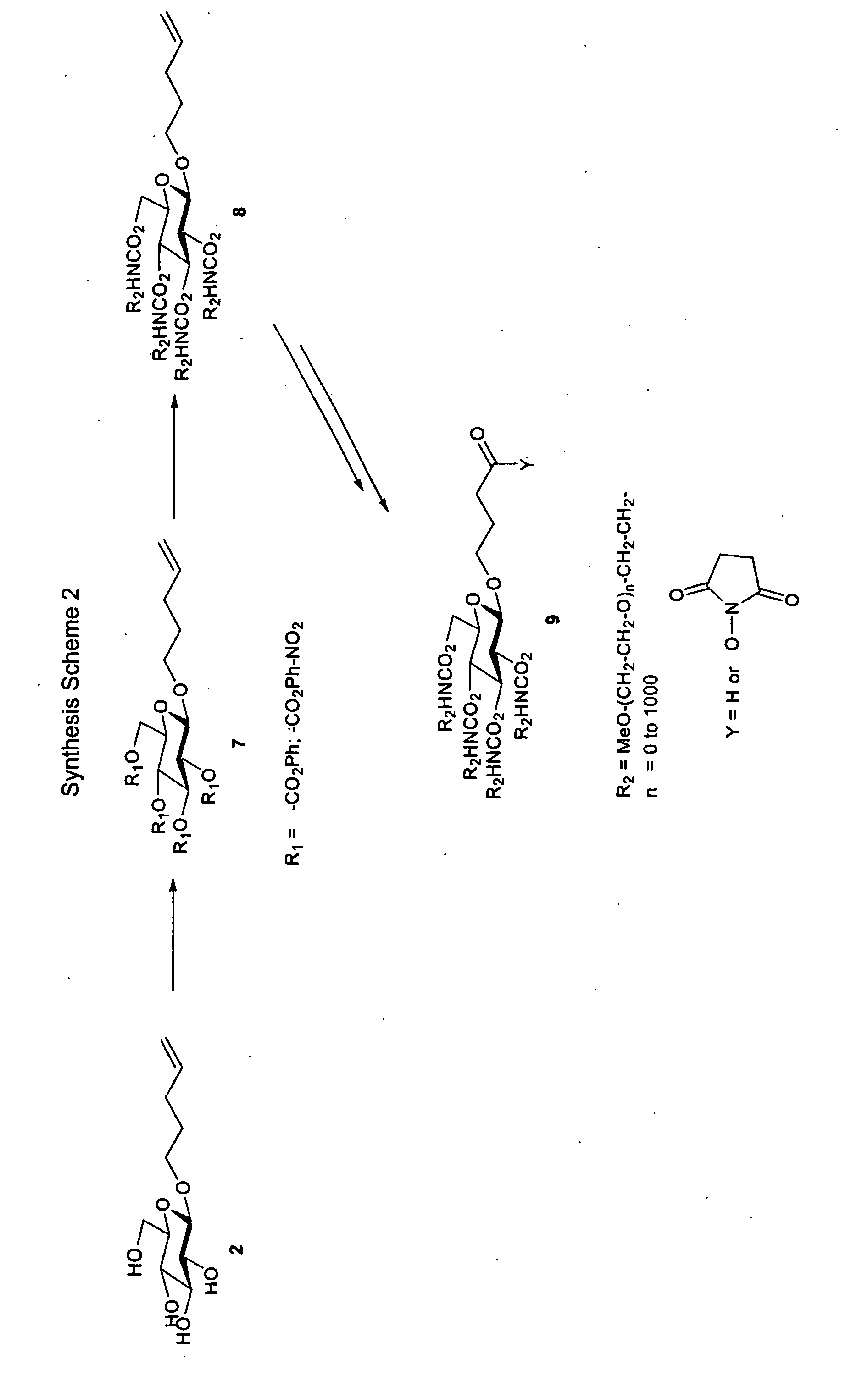

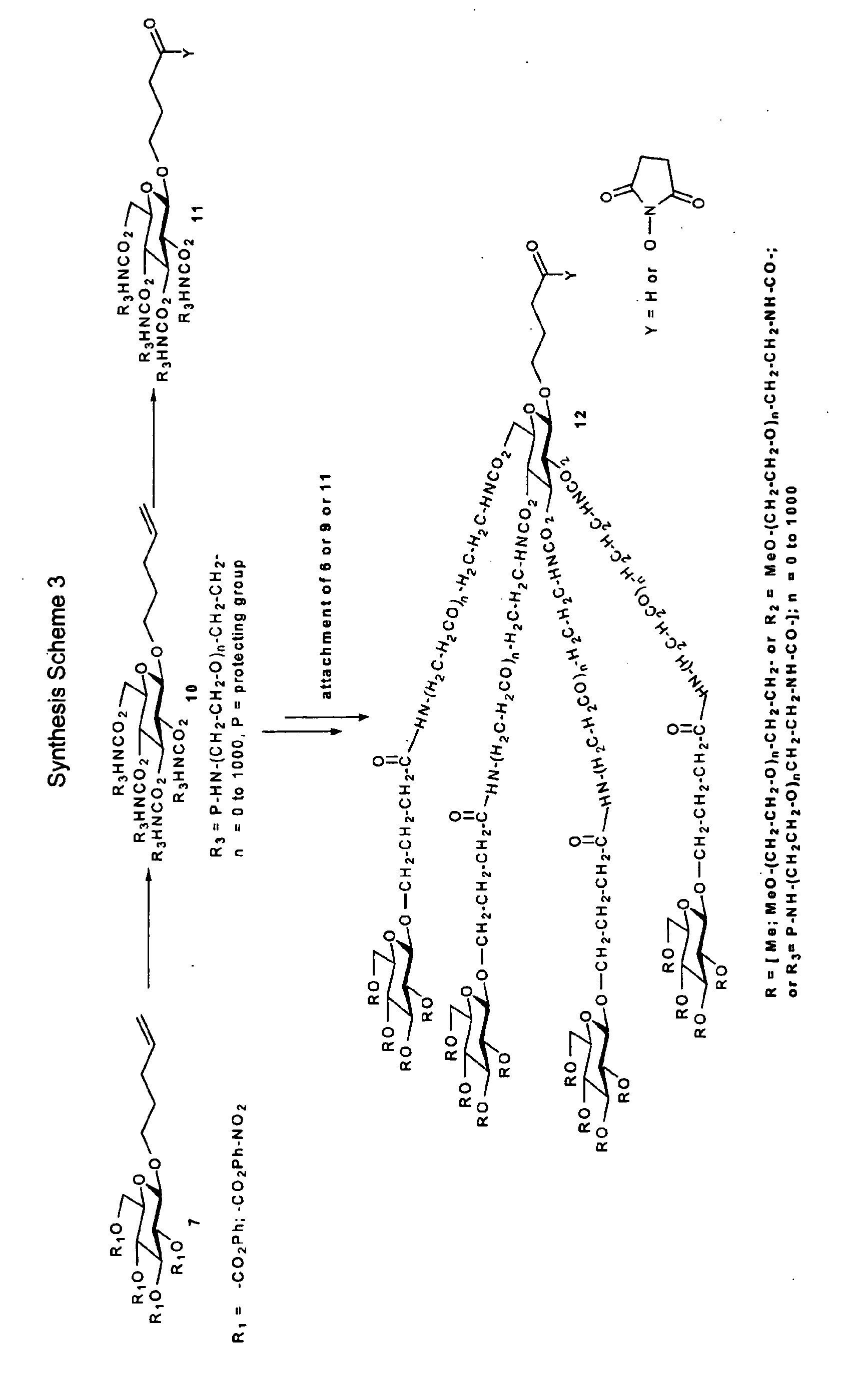

### Example 1 a

### Synthesis of compound 6

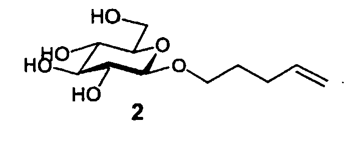

To a solution of 1,2,3,4,6-penta-O-acetyl-β-D-glucopyranose (5 g) in dichloromethane (20 ml) and 4-penten-1-ol (2.7 mL) BF₃Et₂O (3.2 mL) is added at 20 - 30°C. The reaction mixture is stirred for 4 hrs at 20 - 25 °C. Afterwards the reaction mixture is diluted with dichloromethane (20 mL) followed by adding a NaOH solution (0.5 M, 70 mL), so that the pH of the reaction mixture is adjusted to about 6. The organic layer is separated and washed with a bicarbonate solution (5 %, 50 mL). Evaporation of the organic solvent gave the crude glycosylated product (6 g) as a yellow oil.

Sodium (320 mg) dissolved in methanol (4 mL) is added to a solution of the crude material (6 g) in methanol (26 mL) at 20 - 25 °C. Short after the addition of the sodium methylate a white precipitate is formed. The reaction mixture is stirred for 2 hrs at 20 - 25 °C. Afterwards the reaction is quenched by adding hydrochloric acid (1 M) until the pH of the reaction mixture is adjusted to 5 - 6. Evaporation of the solvent and purification of the crude material gave **2** (1.8 g) as a colourless oil. ¹H-NMR (250 MHz, CDCl₃): δ = 1.50 - 1.6 (m, 2H, CH₂-pentenyl), 2.05 -2.10 (m, CH₂-pentenyl), 3.20 - 4.00 (m), 4.10 - 4.6 (m), 4.70 - 5.10 (m, anomeric-H, CH₂=,), 5.60-5.75 (m, 1H, =CH-).
¹C-NMR (62.9 MHz, CDCl₃): δ = 28.52, 29.94, 61.20, 67.73, 69.54, 71.53, 71.96, 74.16, 102.84 (C-1), 115.04 , 137.95.

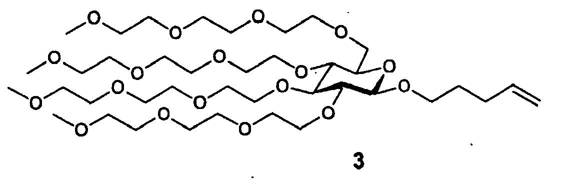

To **2** (2.2 g) dissolved in THF (50 mL) sodium hydride (1.5 g, 60 % in oil) is added at 20-25°C. The formed suspension is heated to 40 °C and stirred at this temperature for 30 min. After cooling to 20-25°C the mono-methoxytriethylene glycol p-toluensulfonate (13.3 g), which has been prepared before from the corresponding alcohol, is added. The stirring is continued for 24 hrs at 20-25°C. Afterwards the reaction mixture is quenched by adding MeOH/water (5.0 mL). Extraction with ethyl acetate and dichloromethane, evaporating of the organic solvent and finally purification by flash chromatography gave 3 as colourless oil (1.66 g, 85 % yield).
¹H-NMR (250 MHz, CDCl₃): δ = 1.50 - 1.6 (m), 1.95-2.05 (m), 3.10-4.20 (m, contain all OCH₃, β-anomeric-H), 4.80-5.00 (m, CH₂=), 5.60-5.68 (m, 1H, =CH). ¹C-NMR (62.9 MHz, CDCl₃): δ = 29.10, 30.34, 59.18, 67.62, 68.00 - 74.00 (signals overlapped), 78.28, 82.30, 83.00, 85.14, 103.39 (β-C-1), 115.02, 138.30.
ESI-MS m/z: 833.5 [M+H]⁺, 855.5 [M+Na]⁺ (positive +ESI Mode, Finnigan AQA)

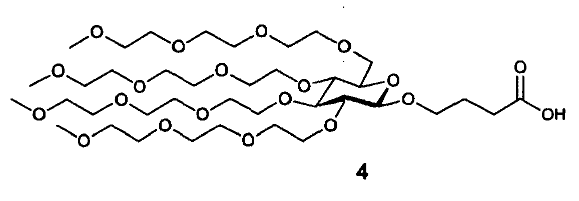

To a solution of NalO₄ (1.91 g) and RuCl₃*H₂O (17.8 mg) in a mixture of dichloromethane/acetonitrile/water (2:2:3, 40 mL) 3 (1.8 g) is added at 20 - 25 °C. While stirring 200 µl glacial acetic acid is added. After stirring of the reaction mixture for 2 hrs a second amount of NalO₄ (1.9 g) is added. Further stirring for 2 hrs at 20 - 25°C is driving the reaction to completion. Afterwards, the reaction mixture is diluted with water and extraction with dichloromethane (50 mL) gave the crude product. Purification via flash chromatography gave **4** as a light yellow oil (1.82 g, 97 % yield). ¹H-NMR (250 MHz, CDCl₃): δ = 1.75 -1.90 (m, CH₂), 2.35 - 2.45 (m, CH₂), 3.10 - 4.00 (m, contain all OCH₃, OCH₂, OCH), 4.15 (d, 1-Hβ, J = 8 Hz).
¹C-NMR (62.9 MHz, CDCl₃): δ = 24.67, 30.25, 52.68, 58.75 - 78.61 (signals overlapped), 82.45, 84.80, 102.73 (beta C-1), 175.95.

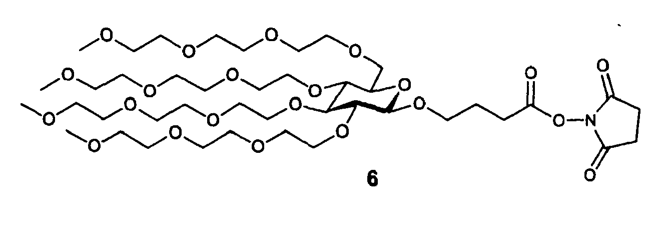

To a solution of **4** (1.8 g) in dichloromethane (10 mL) DCC (686 mg) and NHS (308 mg) is added. The reaction mixture is stirred for 15 hrs at 20 - 25°C. Afterwards the precipitated urea is filtered and the filtrate is evaporated. Purification by flash chromatography gave the active ester **6** as light yellow viscous oil (1.033 g, 51 % yield). ¹H-NMR (250 MHz, CDCl₃): δ = 1.75 -1.90 (m, CH₂), 2.50 -2.65 (m, CH₂), 2.70 (s, 2 x CH₂), 3.15 - 4.00 (m, contain OCH₃, OCH₂, OCH), 4.15 (d, 1-Hβ, J = 8Hz). ¹C-NMR (62.9 MHz, CDCl₃): δ = 24.67, 25.28 (2 x CH₂, NHS), 27.48, 58.67, 66.00 - 72.20 (signals overlapped), 74.57, 77.75, 82.34, 84.69, 102.88 (C-1), 168.20, 168.82. ESI-MS m/z: 948 [M+H]⁺, 970 [M+Na]⁺ (positive +ESI Modus, Finnigan AQA).

### Example 1b:

### Synthesis of compound 7 with R₁ = -CO₂-Ph

**2** (2.0 g, synthesised as described in Example 1a) is dissolved in a mixture of THF (25 mL) DBU (1 mL) and pyridine (7 mL). The reaction mixture is cooled to 0 °C. While stirring phenyl chloroformate (4.3 mL) is added dropwise over a period of 30 min (exothermic reaction). Afterwards the reaction mixture is stirred for 24 hrs at 20 - 25 °C. The reaction mixture is diluted with ethyl acetate (50 mL) followed by adding sodium bicarbonate solution (5 %, 35 mL). Phase separation, solvent evaporation and purification by flash chromatography gave 7 (6.1 g, product contains some phenol) as viscous foam. ¹H-NMR (250 MHz, CDCl₃): δ = 1.65 - 1.80 (m, CH₂), 2.00 - 2.20 (m, CH₂), 3.45 - 3.55 (m), 3.90 - 4.10 (m), 4.45 - 4.55 (m), 4.6 - 4.70 (m), 4.85 - 5.45 (m), 5.60 - 5.75 (m, =CH-), 7.00 - 7.50 (m, phenyl protons, 20 H). ¹C-NMR (62.9 MHz, CDCl₃): δ = 28.58, 29.82 (2 x CH₂), 65.86, 69.58, 71.02, 73.03, 75.62, 77.23, 100.39 (beta C-1), 115.19 (CH₂=),120.82, 120.95, 121.01, 126.12, 126.22, 126.30, 129.42, 137.63 (=CH-), 150.85, 150.93, 150.97, 152.52, 152.77, 153.19, 153.51.

### Example 2

### Modification of biological active compounds

The following examples are given to describe the usefulness of the present invention; but should not limit the invention:

General methods: Protein concentration is determined by the Lowry method (Lowry et al., 1951). The electrophoresis experiments (SDS-Page) are carried out as described by Laemmli (1970) using 12.5 % polyacrylamid gels and stained with Coomassie Brilliant Blue R-250. The enzymes L-Asparaginase, e.g. from Escherichia coli, and Pseudomonas 7A Glutaminase-Asparaginase (PGA) are amido hydrolyses catalyzing the deamidation of the amino acids L-Asparagine and L-Glutamine, respectively. During the reaction ammonia is released, which can be determined by using Nessler's reagent as described by Roberts, J. (1976). The working pH for L-Asparaginase is 8.6 and for PGA 7.2.

Reference Proteins: An L-Asparaginase modified with polyethylene glycol (PEG-Asparaginase) was purchased from Sigma. An Pseudomonas 7A Glutaminase-Asparaginase modified with polyethylene glycol (PEG-PGA) was provided by Medical Enzymes AG. Each PEG chain used for modifying these enzymes has a molecular weight of 5000 g/mol.

### Example 2a

### Preparation of modified L-Asparaginase (short "ASNase"):

The reactions described below were carried out in Eppendorf test tubes. To a solution of L-Asparaginase (ProThera GmbH, 10.4 mg/mL) in bicarbonate buffer (0.05 M, pH 8.5 - 9) compound **6** (14.4 µL, 0.8 eq.) dissolved in DMSO (200 mg/mL) is added. The reaction mixture is slightly stirred at 20 - 25 °C for 30 min. The unreacted and hydrolyzed protecting reagent (**6**) is removed by diafiltration using water. The extent of modification of L-Asparaginase is 26 % as determined by ***M**atrix **A**ssisted **L**aser **D**esorption **l**onization* - ***M**ass **S**pectrometry* (MALDI-MS; matrix: sinapinic acid). Alternatively, the extent of modification can be determined by trinitrobenzenesulfonate titration of the amino functional groups as described by Habeeb (Anal. Biochem. 1966, 14, 328-336).

In a second experiment L-Asparaginase is modified using a larger excess of the protecting reagent **6** (32.3 µL, 1.8 eq.). The reaction and the purification is performed as described above. The modification gave an extent of modification of 35 % determined by MALDI-MS.
Each of the modified L-Asparaginase samples preserved 95 % of the enzymatic activity in comparison with the unmodified L-Asparaginase.

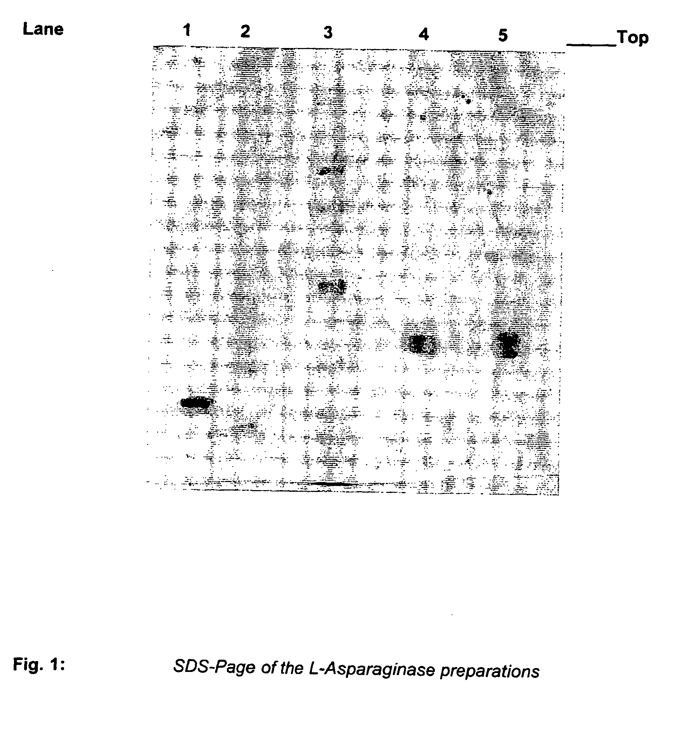

Fig. 1 shows the analysis of different L-Asparaginase preparations by SDS-PAGE.

### Example 2b

### Preparation of modified Pseudomonas 7A Glutaminase-Asparaginase (PGA):

These modification reactions were carried out under the same conditions and with the same materials as described for L-Asparaginase (example 2a). The modification reaction of PGA using 0.8 eq. of the protecting reagent **6** resulted in an extent of modification of 32 % as determined by MALDI-MS. In the case of modified PGA 90 % of the enzymatic activity is preserved in comparison with the unmodified PGA.

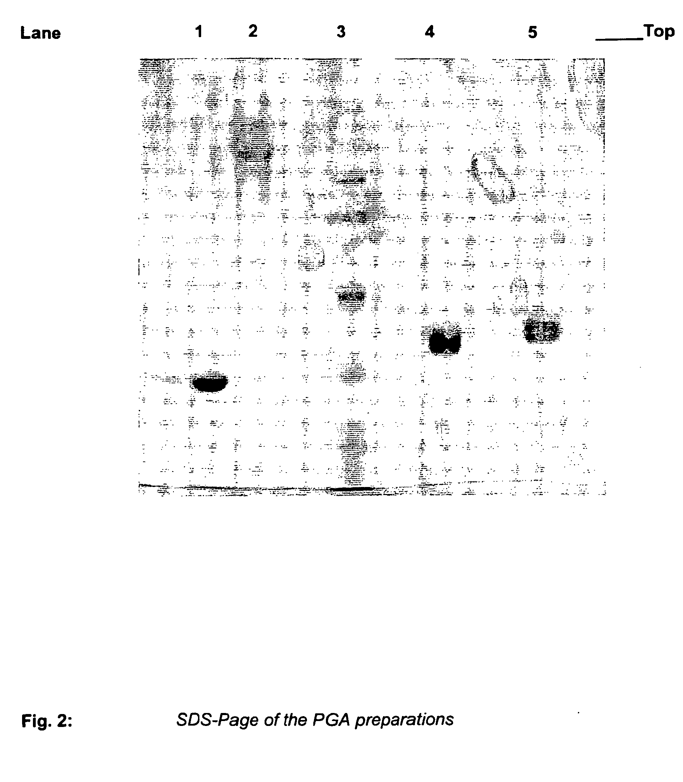

The second preparation is produced by using 1.8 eq. of **6**, which gave an extent of modification of 41 % as determined by MALDI-MS. The enzymatic activity of modified PGA was reduced to 85 % of the activity without such a modification. Fig. 2 shows the analysis of different PGA preparations by SDS-PAGE.

### Example 3

### In-vitro assay to proof the usefulness of the present invention

As a degree for the usefulness of the new carbohydrate containing protecting reagents in pharmaceutical applications, the stability of modified L-Asparaginase and modified PGA, respectively, against the protease Trypsin was investigated in comparison with the unmodified enzymes. Modified L-Asparaginase and modified PGA are prepared as described in example 2a and example 2b, respectively. In addition, an enzyme fraction named "blank" is treated in the same manner as described in examples 2a and 2b, but without addition of active carbohydrate containing protecting reagent. Test tubes contained 1-2 IU/mL of the "blank", modified and unmodified enzyme, respectively, and are incubated at 37°C in Tris/Cl buffer solution in the presence of 0.25µg/mL Trypsin. The control is unmodified enzyme from the mother enzyme solution incubated at 37°C in Tris/Cl buffer solution in the absence of Trypsin. After 0, 10, 30, 60 and 90 min the enzyme activity is determined from an aliquot of each test tube and the control.

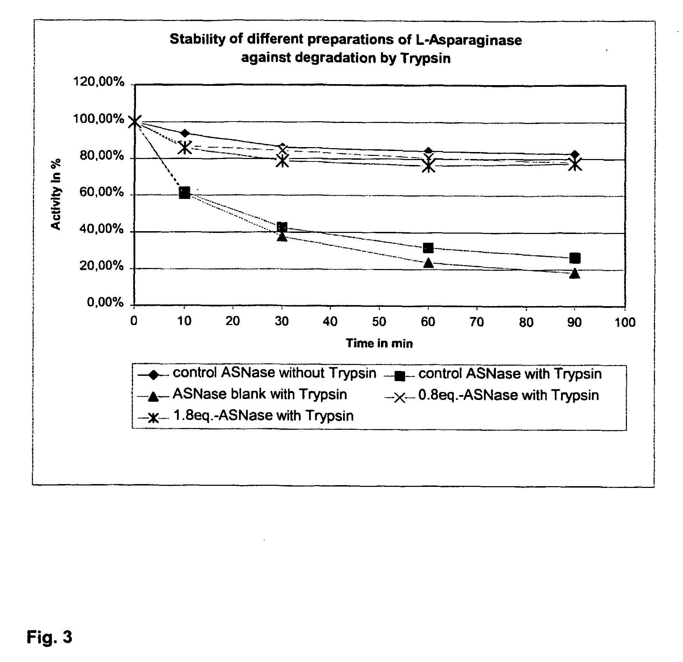

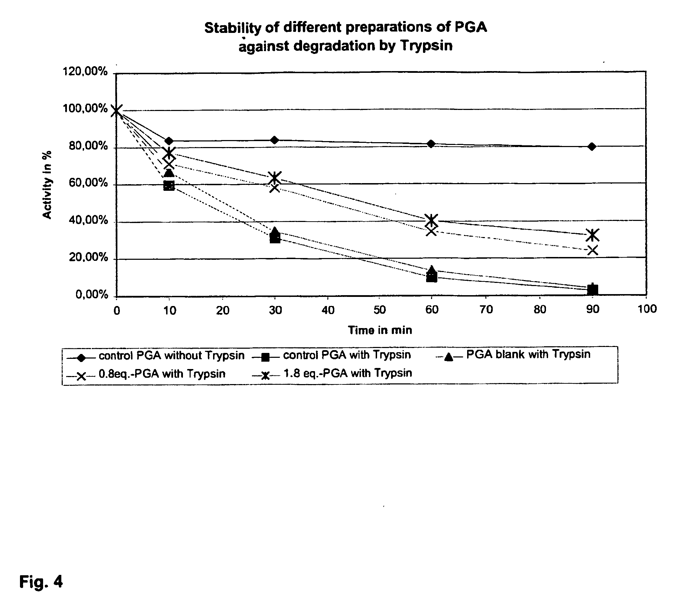

As it is showed in Fig. 3 and Fig. 4 the incubation of the enzymes L-Asparaginase and PGA, respectively, in the presence of Trypsin results in significant loss of enzyme activity after 30 to 90 min. In the case of L-Asparaginase, this reduction in enzyme activity can be completely, and in the case of PGA partly avoided by modifying the enzymes with active carbohydrate containing protecting reagents as described in the present invention. In conclusion, the modification of the enzymes L-Asparaginase and PGA leads to a significant increase of stability against degradation by the protease Trypsin.

Legends to the figures:
Fig. 1:
   Analysis of different L-Asparaginase preparations by SDS-PAGE. Proteins are stained with Coomassie. Modifications are performed with L-Asparaginase provided by ProThera. The samples are: Lane 1) L-Asparaginase (ProThera 2,5 µg), Lane 2) PEG-L-Asparaginase (Sigma, 5 µg), Lane 3) recombinant protein standard (Amersham Bioscience, RPN 800), Lane 4) modified L-Asparaginase (0.8 eq. 6, 2.5 µg), and Lane 5) modified L-Asparaginase (1.8 eq.of 6, 2.5 µg).
Fig. 2:
   Analysis of different PGA preparations by SDS-PAGE. Proteins are stained with Coomassie. Modifications are performed with L-Asparaginase provided by ProThera. The samples are: Lane 1) PGA Medical Enzymes 2,5 µg, Lane 2) PEG-PGA Medical Enzymes, 5 µg, Lane 3) recombinant protein standard (Amersham Bioscience, RPN 800), Lane 4) Modified PGA (0.8 eq. 6, 2.5 µg), and Lane 5) Modified PGA (1.8 eq. 6, 2.5 µg).
Fig. 3:
   Influence of the modification of L-Asparaginase with active carbohydrate containing protecting reagent on stability against degradation by Trypsin as derived from the remaining enzyme activity
Fig. 4:
   Influence of the modification of Pseudomonas 7A Glutaminase-Asparaginase with active carbohydrate containing protecting reagent on stability against degradation by Trypsin as derived from the remaining enzyme activity

## Claims

1. An active carbohydrate containing protecting reagent represented by a carbohydrate central unit G which is attached
a. to a polymer chain at least at one of the hydroxyl groups and
b. to a linkage unit at the anomeric position (1-position)
and which is represented by the general formula I 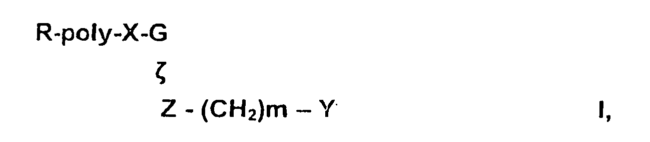 wherein
G is a glycoside central unit, which is a monosaccharide, an oligo- or polysaccharide consisting of monosaccharide units, an amino carbohydrate or a polyol,
R-poly- is
a polymer chain with one ore more recurring monomer units, or
a repeating building block II which is attached via the linkage group to a further glycoside unit G 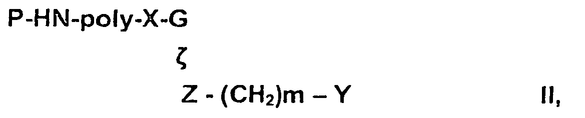 wherein P is an amino protecting group or the next repeating building block or a terminal unit I
in which
R is H, OH or selected from the group consisting of alkyl, O-alkyl (alkyl is containing 1 to 20 C atoms), benzyl, aryl, acetal, aldehyde, alkenyl, acrylate, acrylamide, active sulfone, alkyl amine, protected alkyl amine, thiol and protected thiol, or also selected from the group consisting of a monosaccharide, an oligo- and polysaccharide consisting of monosaccharide units, an amino carbohydrate or a polyol, and poly is selected from a poly alkylene oxide, a poly oxyethylated polyol, a poly olefinic alcohol and a poly acrylomorpholine
**X** is selected from --O--, --S--, --NH--, -NHCO--, --CONH-, -NHCO₂--, O₂CNH--, -CSNH-- and --NHCS--;
m is 1 to 10
**Y is selected** from a group of (O-alkyl)₂, -OSO₂CH₂CF₃ (Tresyl),
- CO- Q, maleimide, -O-CO-nitrophenyl or - trichlorophenyl,
-S-alkyl (C₁ to C₆), -S-S-alkyl, -S-aryl, -S-S-aryl, -S-benzyl,
-S-alkyl (C₁ to C₆)-OH, -S-alkyl(C₁ to C₆)-NH₂,
-S-alkyl(C₁ to C₆)-OSO₂CH₂CF₃ and
-S-alkyl(C₁ to C₆)-CO₂-Q-,
-SO-alkenyl, -Halogen (Cl, Br, l),
wherein
Q is H or OH or is selected from a group of O-aryl, O-benzyl,
O-N-succinimide, O-N-sulfosuccinimide, O-N-phthalimide,
O-N-glutarimide, O-N-tetrahydrophtalimide,
-N-norbornene-2,3-dicarboximide, hydroxybenzotriazole
and hydroxy-7-azabenzotriazole
and
**Z** is selected from -O-, -S- or -NH-, -N(alkyl C₁ to C₂₀)- , -N(aryl)-, -N(benzyl)-, -N(alkyl C₁ to C₂₀-OH)-, -N(alkyl C₁ to C₂₀-NH₂)-.

2. The reagent according to claim 1, wherein the carbohydrate central unit is represented in the L- or D-configuration.

3. The reagent according to any one of claims 1 to 2, wherein the configuration at the anomeric position (1-position) of the glycoside central unit is alpha, beta or a mixture of both.

4. The reagent according to any one of claims 1 to 3, wherein the monosaccharide is an aldose, preferred glucose; a ketose, preferred fructose; a pyranose, preferred mannose, glucose; a furanose, preferred ribose, arabinose; an oligo- and polysaccharide consisting of monosaccharide units, preferred lactose, melibiose and an amino carbohydrates and amino carbohydrate containing oligo- or polysaccharides, respectively, preferred mannose amine, glucose amine, lactose amine.

5. The reagent according to any one of claims 1 to 4, wherein the polymer chain is terminated by a methoxy group.

6. The reagent according to any one of the claims 1 to 5, wherein the polymer chain is a polyethylene glycol, which is represented by the general structure:
R--(CH₂-CH₂-O)ₙ-CH₂-CH₂--X--
wherein
R and X have one of the above-mentioned meaning and n is 0 to 2000.

7. The reagent according to claim 6, wherein R is a rest of formula II or a repeating building block, which has the following structure: 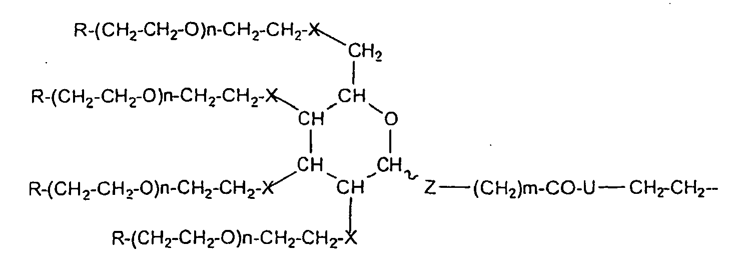 wherein n, m, R, X and Z have the above-mentioned meaning,
U is selected of --O--, --S-- and --NH--.

8. The reagent according to claim 6, wherein R is a repeating building block, which has the following structure: 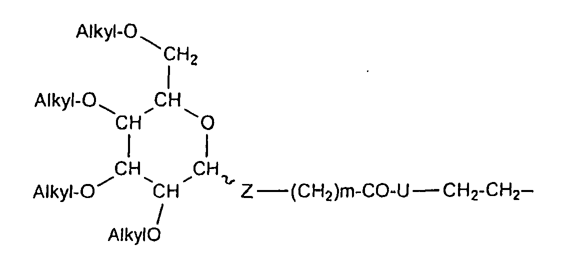 wherein m, R. and Z have the above-mentioned meaning,
alkyl is an alkyl group with 1 to 20 C atoms and
U is selected of --O--, --S-- and --NH--.

9. The reagent according to claim 7 or 8, wherein the building block repeats 4 to 1000 times.

10. The reagent according to any one of claims 1 to 9, wherein the polymer chain is an unsubstituted chain except for the terminus.

11. The reagent according to any one of claims 1 to 9, wherein the polymer chain is a random or block copolymer or a terpolymer.

12. The reagent according to any one of claims 1 to 11,
which has the following structure: 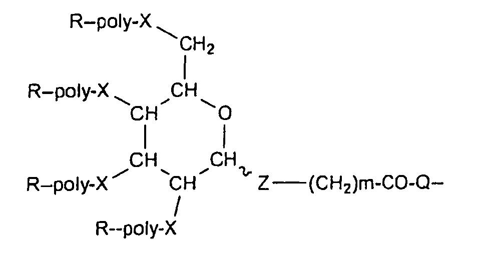 wherein m, poly, Q, R, X and Z have one of the above-mentioned meaning.

13. A method for preparing the active carbohydrate containing protecting reagent of any one of claims 1 to 12, wherein the conjugation reaction between a glycoside, which contains a pentenyl group at the anomeric position of the glycoside, and an activated polymer chain, is carried out in solution, followed by conversion of the pentenyl group of the desired synthesis intermediate into the activated carbohydrate containing protecting reagent as shown in formula I and purification of the activated reagent from the reaction mixture.

14. Use of an active carbohydrate containing protecting reagent according to any one of claims 1 to 12 in the manufacture of a water soluble and isolatable conjugate with at least one biologically active molecule, a surface or a whole cell.

15. The use according to claim 14, wherein the at least one biologically active molecule is selected from the group consisting of proteins, enzymes, glycoproteins, polypeptides, drugs, dyes, nucleosides, oligonucleotides, antibodies, lipids, liposomes, phospholipids, liposomes, microorganisms, human cells and surfaces.

16. The use according to claim 15, wherein the at least one biologically active molecule is an enzyme.

17. The use according to claim 16, wherein the enzyme is asparaginase or glutaminase-asparaginase.

18. The use according to claim 14, wherein the compound serves to bind a biologically active molecule to an other biologically active molecule, which may be the same or different, or to bind a biologically active molecule to a surface.

19. The use according to claim 14, that the water soluble and isolatable conjugates having the structure: 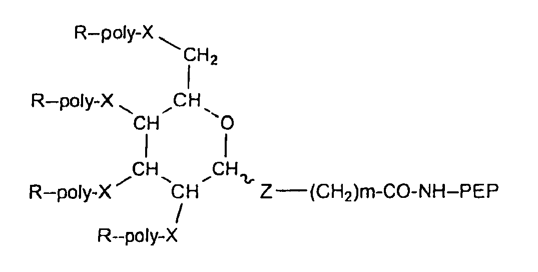 or 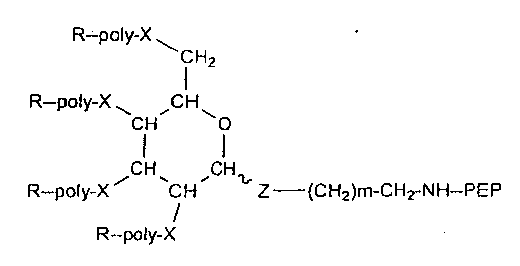 wherein m, poly, R, X and Z have the above-mentioned meaning and the unit NH-PEP represents an amino function containing residue on a biologically active molecule.

## Patentansprüche

1. Aktives Kohlenhydrat-enthaltendes Schutzreagens, dargestellt durch eine Kohlenhydrat-Zentraleinheit G, die gebunden ist
a. an eine Polymerkette an mindestens einer der Hydroxylgruppen und
b. an eine Verbindungseinheit an der Anomerposition (1-Position) und die dargestellt wird durch die allgemeine Formel I 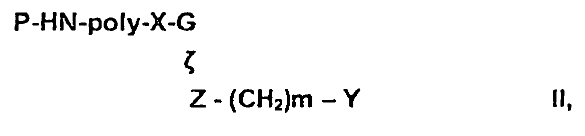
worin
**G** eine Glykosid-Zentraleinheit ist, die ein Monosaccharid, ein Oligosaccharid oder Polysaccharid ist, bestehend aus Monosaccharideinheiten, einem Aminokohlenhydrat oder einem Polyol,
**R-poly-**
eine Polymerkette mit einer oder mehreren Wiederholungsmonomereinheiten
oder
eine Wiederholungsbaueinheit II ist, die gebunden ist über die Bindungsgruppe an eine weitere Glykosideinheit G 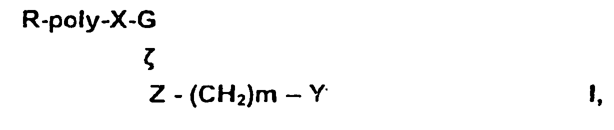 worin P eine Aminoschutzgruppe oder die nächste Wiederholungsbaueinheit oder eine terminale Einheit I ist;
worin
**R** H, OH ist oder ausgewählt ist aus der Gruppe, bestehend aus Alkyl, O-Alkyl (Alkyl enthält 1 bis 20 C-Atome), Benzyl, Aryl, Acetal, Aldehyd, Alkenyl, Acrylat, Acrylamid, aktives Sulfon, Alkylamin, geschütztes Alkylamin, Thiol und geschütztes Thiol, oder ebenfalls ausgewählt ist aus der Gruppe, bestehend aus einem Monosaccharid, einem Oligo- und Polysaccharid, bestehend aus Monosaccharideinheiten, einem Aminokohlenhydrat oder einem Polyol, und
worin poly ausgewählt ist aus einem Polyalkylenoxid, einem polyoxyethylierten Polyol, einem polyolefinischen Alkohol und einem Polyacrylomorpholin,
**X** Ausgewählt ist aus -O-, -S-, -NH-, -NHCO-, -CONH-, -NHCO₂-,
-O₂CNH-, - CSNH- und -NHCS-;
**m** 1 bis 10 ist,
**Y** ausgewählt ist aus einer Gruppe, bestehend aus (O-Alkyl)₂,
-OSO₂CH₂CF₃ (Tresyl), -CO-Q, Maleimid, -O-CO-Nitrophenyl oder
-Trichlorphenyl,
-S-Alkyl (C₁ bis C₆), -S-S-Alkyl, -S-Aryl, -S-S-Aryl, -S-Benzyl,
-S-Alkyl (C₁ bis C₆)-OH, -S-Alkyl (C₁ bis C₆)-NH₂,
-S-Alkyl (C₁ bis C₆)-OSO₂CH₂CF₃ und
-S-Alkyl (C₁ bis C₆)-CO₂-Q-,
-SO-Alkenyl, -Halogen (Cl, Br, 1),
worin
**Q** H oder OH ist oder ausgewählt ist aus der Gruppe, bestehend aus O-Aryl, O-Benzyl, O-N-Succinimid, O-N-Sulfosuccinimid, O-N-Phthalimid, O-N-Glutarimid, O-N-Tetrahydrophthalimid, - N-Norbornen-2,3-dicarboximid, Hydroxybenzotriazol und Hydroxy-7-azabenzotriazol
und
Z ausgewählt ist aus -O-, -S- oder -NH-, -N(C₁- bis C₂₀-Alkyl)-,
-N(Aryl)-, -N(Benzyl)-, -N(C₁- bis C₂₀-Alkyl-OH)-, -N(C₁- bis C₂₀-Alkyl-
NH₂)-.

2. Reagens nach Anspruch 1, worin die Kohlenhydrat-Zentraleinheit in der L- oder D-Konfiguration dargestellt ist.

3. Reagens nach einem der Ansprüche 1 bis 2, worin die Konfiguration an der Anomerposition (1-Position) der Glykosid-Zentraleinheit alpha, beta oder ein Gemisch von beidem ist.

4. Reagens nach einem der Ansprüche 1 bis 3, worin das Monosaccharid eine Aldose, bevorzugt Glucose; eine Ketose, bevorzugt Fructose; eine Pyranose, bevorzugt Mannose, Glucose; eine Furanose, bevorzugt Ribose, Arabinose; ein Oligo- und Polysaccharid, bestehend aus Monsaccharideinheiten, bevorzugt Lactose, Melibiose, und Aminokohlenhydrate, und Aminokohlenhydrat, enthaltend Oligo- bzw. Polysaccharide, bevorzugt Mannoseamin, Glucoseamin, Lactoseamin, ist.

5. Reagens nach einem der Ansprüche 1 bis 4, worin die Polymerkette durch eine Methoxygruppe terminiert ist.

6. Reagens nach einem der Ansprüche 1 bis 5, worin die Polymerkette ein Polyethylenglykol ist, das durch die allgemeine Struktur:
R--(CH₂-CH₂-O)n-CH₂-CH₂--X--
dargestellt wird, worin
R und X eine der oben genannten Bedeutungen haben und n 0 bis 2000 ist.

7. Reagens nach Anspruch 6, worin R ein Rest mit der Formel II oder eine sich wiederholende Baueinheit ist, die die folgende Struktur aufweist: 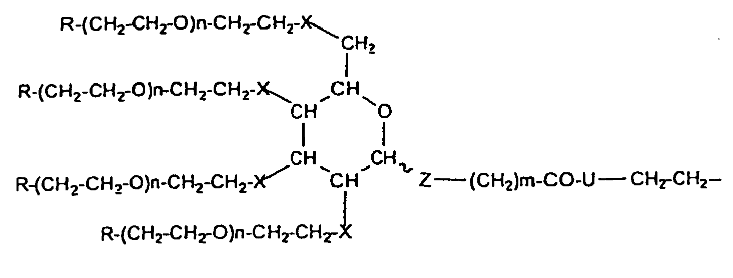 worin n, m, R, X und Z die oben genannte Bedeutung haben, U ausgewählt ist aus -O-, -S- und -NH-.

8. Reagens nach Anspruch 6, worin R eine sich wiederholende Baueinheit ist, die die folgende Struktur: 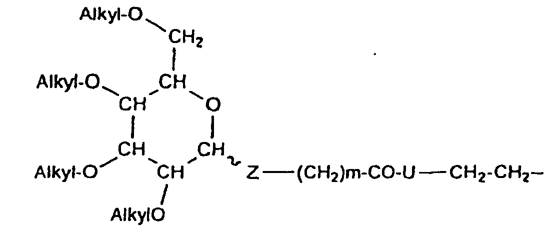 aufweist, worin m, R und Z die oben genannte Bedeutung haben, Alkyl eine Alkylgruppe mit 1 bis 20 C-Atomen ist und U ausgewählt ist aus -O-, -S- und -NH-.

9. Reagens nach Anspruch 7 oder 8, worin die Baueinheit sich 4- bis 1000-mal wiederholt.

10. Reagens nach einem der Ansprüche 1 bis 9, worin die Polymerkette mit Ausnahme des Terminus eine unsubstituierte Kette ist.

11. Reagens nach einem der Ansprüche 1 bis 9, worin die Polymerkette ein statistisches oder Blockcopolymer oder ein Terpolymer ist.

12. Reagens nach einem der Ansprüche 1 bis 11, das die folgende Struktur aufweist: 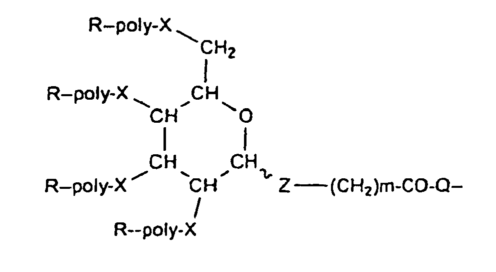 worin m, poly, Q, R, X und Z eine der oben genannten Bedeutungen haben.

13. Verfahren zum Herstellen des aktives Kohlenhydrat-enthaltenden Schutzreagens nach einem der Ansprüche 1 bis 12, worin die Konjugationsreaktion zwischen einem Glykosid, das eine Pentenylgruppe an der Anomerposition des Glykosids enthält, und einer aktivierten Polymerkette durchgeführt wird in Lösung, gefolgt von einer Umwandlung der Pentenylgruppe des gewünschten Synthesezwischenprodukts in das aktiviertes Kohlenhydratenthaltende Schutzreagens , wie in Formel I gezeigt, und Reinigen des aktivierten Reagens vom Reaktionsgemisch.

14. Verwendung eines aktives Kohlenhydrat-enthaltenden Schutzreagens nach einem der Ansprüche 1 bis 12 bei der Herstellung eines wasserlöslichen und isolierbaren Konjugats mit mindestens einem biologisch aktiven Molekül, einer Oberfläche oder einer Gesamtzelle.

15. Verwendung nach Anspruch 14, worin das mindestens eine biologisch aktive Molekül ausgewählt ist aus der Gruppe, bestehend aus Proteinen, Enzymen, Glykoproteinen, Polypeptiden, Arzneimitteln, Farbstoffen, Nucleosiden, Oligonucleotiden, Antikörpern, Lipiden, Liposomen, Phospholipiden, Liposomen, Mikroorganismen, humanen Zellen und Oberflächen.

16. Verwendung nach Anspruch 15, worin das mindestens eine biologisch aktive Molekül ein Enzym ist.

17. Verwendung nach Anspruch 16, worin das Enzym Asparaginase oder Glutaminase-Asparaginase ist.

18. Verwendung nach Anspruch 14, worin die Verbindung dazu dient ein biologisch aktives Molekül an ein anderes biologisch aktives Molekül zu binden, das gleich oder verschieden sein kann, oder ein biologisch aktives Molekül an eine Oberfläche zu binden.

19. Verwendung nach Anspruch 14, wobei die wasserlöslichen und isolierbaren Konjugate die Struktur: 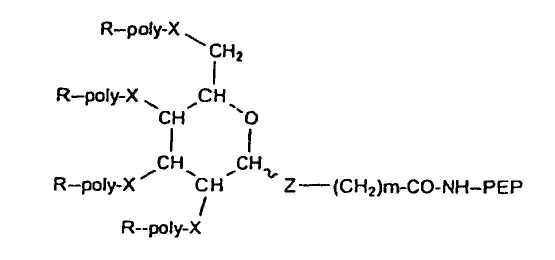 oder 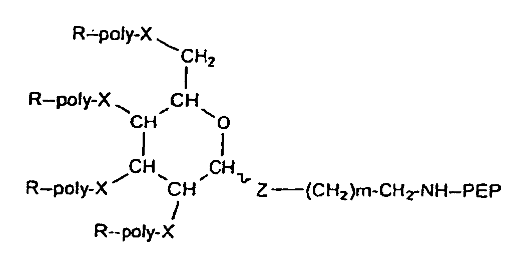 aufweisen, worin m, poly, R, X und Z die oben genannte Bedeutung haben und die Einheit NH-PEP einen Aminofunktion-enthaltenden Rest auf einem biologisch aktiven Molekül darstellt.

## Revendications

1. Réactif protecteur contenant un hydrate de carbone actif représenté par une unité centrale d'hydrate de carbone G qui est liée
a. à une chaîne de polymère au niveau d'au moins l'un des groupes hydroxyle, et
b. à une unité de liaison au niveau de la position anomère (position 1), et qui est représenté par la formule générale I 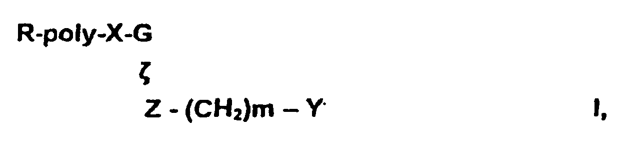
dans laquelle
**G** est une unité centrale de glycoside, qui est un monosaccharide, un oligo- ou polysaccharide constitué d'unités de monosaccharides, un hydrate de carbone aminé ou un polyol,
**R-poly** est une chaîne de polymère ayant une ou plusieurs unités monomères récurrentes, ou
un bloc constitutif de répétition II qui est lié par l'intermédiaire du groupe de liaison à une autre unité de glycoside G 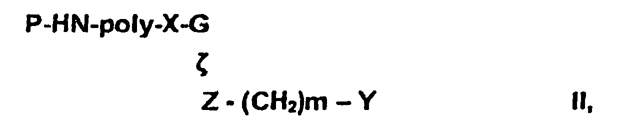 où P est un groupe protecteur d'amino ou le bloc constitutif de répétition suivant
ou une unité terminale I
où
**R** est H, OH, ou est choisi dans le groupe constitué par alkyle, O-alkyle (alkyle contient de 1 à 20 atomes de carbone), benzyle, aryle, acétal, aldéhyde, alcényle, acrylate, acrylamide, sulfone active, alkylamine, alkylamine protégée, thiol et thiol protégé, ou est aussi choisi dans le groupe constitué par un monosaccharide, un oligo- et polysaccharide constitué d'unités de monosaccharides, un hydrate de carbone aminé ou un polyol, et
**poly** est choisi parmi un poly(oxyde d'alkylène), un polyol polyoxyéthylé, un
poly(alcool oléfinique) et une polyacrylomorpholine,
**X** est choisi parmi -O-, -S-, -NH-, -NHCO-, -CONH-, -NHCO₂-, -O₂CNH-, -CSNH- et -NHCS-,
**m** est 1 à 10
**Y** est choisi dans le groupe de (O-alkyl)₂, -OSO₂CH₂CF₃ (trésyle), -CO-Q, maléimide, -O-CO-nitrophényle ou -trichlorophényle, -S-alkyle (en C₁-C₆), -S-S-alkyle, -S-aryle, -S-S-aryle, -S-benzyle, -S-(alkyle en C₁-C₆)-OH, -S-(alkyle en C₁-C₆)-NH₂, S-(alkyle en C₁-C₆)-OSO₂CH₂CF₃ et -S-(alkyle en C₁-C₆)-CO₂-Q, -SO-alcényle, halogène (CI, Br, I),
où
**Q** est H ou OH ou est choisi dans le groupe de O-aryle, O-benzyle, O-N-succinimide, O-N-sulfosuccinimide, O-N-phtalimide, O-N-glutarimide, O-N-tétrahydrophtalimide, -N-norbornène-2,3-dicarboximide, hydroxybenzotriazole et hydroxy-7-azabenzotriazole,
et
**Z** est choisi parmi -O-, -S- ou -NH-, -N(alkyle en C₁-C₂₀)-, -N(aryle)-, -N(benzyle)-, -N(alkyl en C₁-C₂₀-OH)-, -N(alkyl en C₁-C₂₀-NH₂)-.

2. Réactif selon la revendication 1, dans lequel l'unité centrale d'hydrate de carbone est représentée dans la configuration L ou D.

3. Réactif selon l'une quelconque des revendications 1 à 2, dans lequel la configuration au niveau de la position anomère (position 1) de l'unité centrale de glycoside est alpha, bêta ou un mélange des deux.

4. Réactif selon l'une quelconque des revendications 1 à 3, dans lequel le monosaccharide est un aldose, de préférence le glucose; un cétose, de préférence le fructose; un pyranose, de préférence le mannose, le glucose; un furanose, de préférence le ribose, l'arabinose; un oligo- et polysaccharide constitué d'unités de monosaccharides, de préférence le lactose, le mélibiose, et, respectivement, un hydrate de carbone aminé et un hydrate de carbone aminé contenant des oligo- et polysaccharides, de préférence une mannosamine, une glucosamine, une lactosamine.

5. Réactif selon l'une quelconque des revendications 1 à 4, dans lequel la chaîne de polymère est terminée par un groupe méthoxy.

6. Réactif selon l'une quelconque des revendications 1 à 5, dans lequel la chaîne de polymère est un polyéthylèneglycol, qui est représenté par la structure générale
R-(CH₂-CH₂-O)ₙ-CH₂-CH₂-X-
dans laquelle
R et X ont l'une des significations précitées et n est 0 à 2 000.

7. Réactif selon la revendication 6, dans lequel R est un reste de formule II ou un bloc constitutif de répétition, qui a la structure suivante: 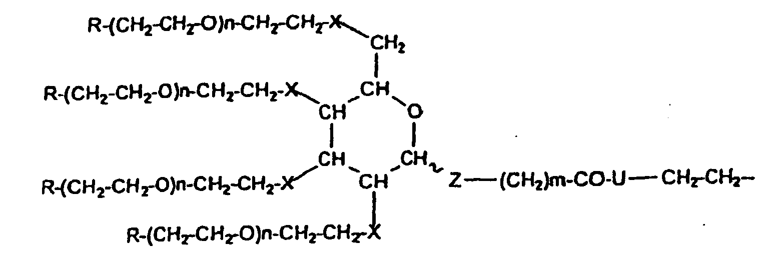 dans laquelle n, m, R, X et Z ont la signification précitée,
U est choisi parmi -O-, -S- et -NH-.

8. Réactif selon la revendication 6, dans lequel R est un bloc constitutif de répétition, qui a la structure suivante: 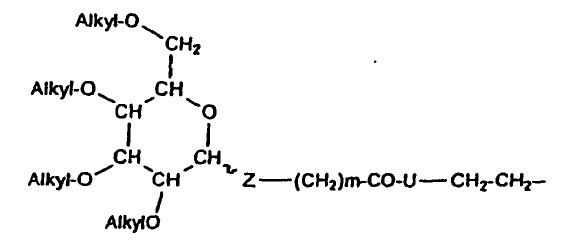 dans laquelle m, R et Z ont la signification précitée,
alkyle est un groupe alkyle de 1 à 20 atomes de carbone et
U est choisi parmi -O-, -S- et -NH-.

9. Réactif selon la revendication 7 ou 8, dans lequel le bloc constitutif se répète 4 à 1 000 fois.

10. Réactif selon l'une quelconque des revendications 1 à 9, dans lequel la chaîne de polymère est une chaîne non substituée à l'exception de l'extrémité.

11. Réactif selon l'une quelconque des revendications 1 à 9, dans lequel la chaîne de polymère est un copolymère aléatoire ou à blocs ou un terpolymère.

12. Réactif selon l'une quelconque des revendications 1 à 11, qui a la structure suivante: 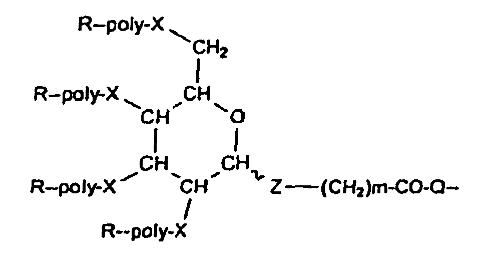 dans laquelle m, poly, Q, R, X et Z ont l'une des significations précitées.

13. Procédé de préparation du réactif protecteur contenant un hydrate de carbone actif selon l'une quelconque des revendications 1 à 12, dans lequel on effectue une réaction de conjugaison entre un glycoside, qui contient un groupe pentényle à la position anomère du glycoside, et une chaîne de polymère activée en solution, puis on convertit le groupe pentényle de l'intermédiaire de synthèse désiré en le réactif protecteur contenant un hydrate de carbone activé tel que présenté dans la formule I et on purifie le réactif activé à partir du mélange réactionnel.

14. Utilisation d'un réactif protecteur contenant un hydrate de carbone actif selon l'une quelconque des revendications 1 à 12 dans la préparation d'un conjugué soluble dans l'eau et pouvant être isolé avec au moins une molécule biologiquement active, une surface ou une cellule entière.

15. Utilisation selon la revendication 14, dans laquelle la au moins une molécule biologiquement active est choisie dans le groupe constitué par des protéines, des enzymes, des glycoprotéines, des polypeptides, des médicaments, des colorants, des nucléosides, des oligonucléotides, des anticorps, des lipides, des liposomes, des phospholipides, des liposomes, des microorganismes, des cellules humaines et des surfaces.

16. Utilisation selon la revendication 15, dans laquelle la au moins une molécule biologiquement active est une enzyme.

17. Utilisation selon la revendication 16, dans laquelle l'enzyme est une asparaginase ou une glutaminase-asparaginase.

18. Utilisation selon la revendication 14, dans laquelle le composé sert à lier une molécule biologiquement active à une autre molécule biologiquement active, qui peuvent être identiques ou différentes, ou à lier une molécule biologiquement active à une surface.

19. Utilisation selon la revendication 14, dans laquelle les conjugués solubles dans l'eau et pouvant être isolés ont la structure 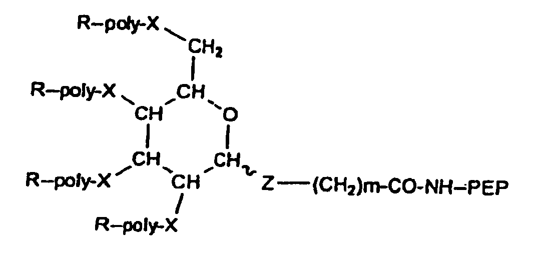 ou 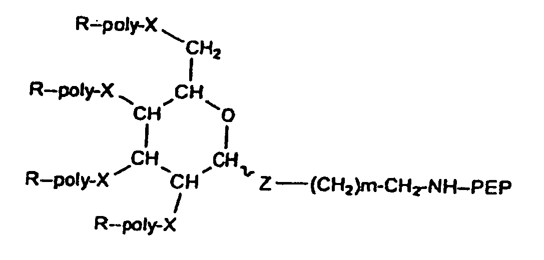 où m, poly, R, X et Z ont la signification précitée et l'unité NH-PEP représente un résidu contenant une fonction amino sur une molécule biologiquement active.
